# EUROPÄISCHE PATENTSCHRIFT

(11) **EP 3 005 338 B1**
(45) Veröffentlichungstag und Bekanntmachung des Hinweises auf die Patenterteilung: **01.03.2017**
(21) Anmeldenummer: 14714971.0
(22) Anmeldetag: 27.03.2014
(51) Int. Cl.: G09B 29/10, G01C 21/26

(54) **FAHRERASSISTENZSYSTEM MIT ZUSÄTZLICHEN INFORMATIONEN ZU EINER STRASSENKARTE**
DRIVER ASSISTANCE SYSTEM WITH ADDITIONAL INFORMATION SUPPLEMENTARY TO A ROAD MAP
SYSTÈME D'AIDE À LA CONDUITE CONTENANT DES INFORMATIONS ADDITIONNELLES COMPLÉTANT UNE CARTE ROUTIÈRE

(30) Priorität: 24.05.2013 DE 102013209729
(43) Veröffentlichungstag der Anmeldung: 13.04.2016
(73) Patentinhaber: Robert Bosch GmbH, 70442 Stuttgart (DE)
(72) Erfinder: MUEHLMANN, Karsten, 70499 Stuttgart (DE); HASBERG, Carsten, 74360 Ilsfeld-Auenstein (DE); RUEHLE, Armin, 71384 Weinstadt (DE); SCHWARZKOPF, Jeannine, 71638 Ludwigsburg (DE)
(86) Internationale Anmeldenummer: PCT/EP2014/056120
(87) Internationale Veröffentlichungsnummer: WO 2014/187594

(56) Entgegenhaltungen:
- DE-A1-102008 012 654
- DE-A1-102008 012 661
- DE-C1- 19 916 967

## Beschreibung

Die vorliegende Erfindung geht aus von einem Fahrerassistenzsystem gemäß Anspruch 1, einem Verfahren zum Unterstützen eines Fahrers gemäß Anspruch 5, einem System gemäß Anspruch 6 und einem Datenspeicher gemäß Anspruch 7.

### Stand der Technik

Automatisierte Fahr-bzw. Fahrerassistenzfunktionen oder auch autonome Fahrzeuge sind häufig abhängig von einer Karte des Straßennetzes. Außerdem müssen sie die Verkehrsregeln des betreffenden Landes kennen, in dem sich das Fahrzeug momentan befindet.

Desweiteren können mit Hilfe einer sogenannten Umfeldsensorik zusätzlich Informationen aus der Fahrzeugumgebung gewonnen werden, wie beispielsweise über den aktuellen und vorausliegenden Straßenverlauf, den Zustand der Fahrbahnoberfläche, aber auch Informationen über weitere Verkehrsteilnehmer in der unmittelbaren Umgebung. Damit ist es beispielsweise möglich, eine Parametrisierung für das Fahrerassistenzsystem vorzunehmen, welches einer Veränderung der Gefahrensituation entsprechend Rechnung trägt.

Aus DE 199 16 967 C1 sind ein Verfahren zur Aktualisierung einer Verkehrswegenetzkarte und ein kartengestütztes Verfahren zur Fahrzeugführungsinformationserzeugung bekannt. Dabei werden durch ein Probefahrzeug aktuelle Strecken- und Attributearten vom jeweils befahrbaren Streckenabschnitt aufgenommen und die Daten der Verkehrswegenetzkarte aktualisiert. Die Attribute können mit zeitbezogener Karte abgelegt sein, d. h. der Wert eines Attributs kann für verschiedene Jahreszeiten oder Tage oder auch tageszeitabhängig verschieden sein.

Aus DE 10 2008 012 654 A1 ist ein Verfahren für eine Online-Erstellung einer digitalen Karte bekannt. Es ist eine Aktualisierungseinrichtung zur Erstellung und zur Aktualisierung einer digitalen Karte in einem Fahrzeug angegeben, welche auf Positionsdaten benachbarter Fahrzeuge zugreift. Diese Positionsdaten können innerhalb der Aktualisierungseinrichtung weiter verarbeitet werden, um eine genaue und zeitnahe Aktualisierung eines Teilbereichs der Karte zu ermöglichen, ohne dass hierbei eine Kommunikation mit dem Kartenhersteller oder Serviceprovider notwendig ist.

Aus DE 10 2008 012 661 A1 sind eine Aktualisierungseinheit und ein Verfahren zur Aktualisierung einer digitalen Karte bekannt. Dazu wird ein Fahrzeug verwendet, das eine Vielzahl von Sensoren aufweist, die die aktuelle Verkehrssituation, die Bewegung des Fahrzeugs oder auch die Straßenverhältnisse messen. Diese Messwerte werden an eine Zentrale übergeben, die diese auswertet und dann entsprechende Aktualisierungsdaten zur Aktualisierung der digitalen Karte an andere Fahrzeuge schickt.

### Offenbarung der Erfindung

Die Aufgabe der Erfindung besteht darin, ein Fahrerassistenzsystem zu verbessern.

Eine Verbesserung der Fahrerassistenzsysteme, die -teilautonom oder autonomin Antrieb, Steuerung oder Signalisierungseinrichtungen des Fahrzeuges eingreifen, oder durch Mensch-Maschine-Schnittstellen den Fahrer entsprechend warnen, besteht darin, Informationen über das Verhalten anderer relevanter Verkehrsteilnehmer besser vorhersagen zu können.

Die Erfindung ist definiert in den unabhängigen Ansprüchen.

Die Aufgabe wird dadurch gelöst, dass die Straßenkarten, auf die die Fahrerassistenzsysteme der Fahrzeuge zurückgreifen mit Zusatzinformationen über die orts- und/oder zeitspezifische Einhaltung von Verkehrsregeln angereichert werden. Gemäß fest vorgegebener Regeln kann die Schicht aktiv sein und ermöglicht damit eine verbesserte Vorhersage über das Verhalten bestimmter Verkehrsteilnehmer, zu denen nicht nur Autofahrer, sondern auch Radfahrer, Fußgänger und andere gehören. Die Interpretation des Fahrzeugumfeldes wird mit Hilfe dieser zusätzlichen Informationen verbessert. Das eigene Fahrverhalten kann auf diese Weise optimiert werden, es wird komfortabler und sicherer und schlussendlich können Unfälle verhindert werden.

Weiterhin wird die Aufgabe mit einem Fahrerassistenzsystem für ein Fahrzeug gelöst, das auf Zusatzinformationen über eine orts- und/oder zeitspezifische Einhaltung von Verkehrsregeln zugreifen kann.

Die Zusatzinformation wird in Form eines Bewegungsmodells berücksichtigt, wobei das Bewegungsmodell ausgebildet ist, um das Verhalten eines Verkehrsteilnehmers vorauszusagen, und wobei das Bewegungsmodell abhängig von einem Ort und/oder einer Uhrzeit ist. Das Bewegungsmodell kann z.B. das Verhalten eines Fußgängers oder das Verhalten eines Fahrzeuges voraussagen. Entsprechend dem Bewegungsmodell kann das Fahrerassistenzsystem eine andere Empfehlung und/oder eine andere Steuerung des Fahrzeuges vornehmen. Das Fahrerassistenzsystem kann beispielsweise in die Motorsteuerung und/oder in die Lenkung und/oder in das Bremssystem eingreifen.

In den Unteransprüchen sind weitere vorteilhafte Ausgestaltungen und Verbesserungen des erfindungsgemäßen Verfahrens zur Hinterlegung zusätzlicher Informationen in einer Straßenkarte eines Fahrerassistenzsystems aufgeführt.

Die diesbezüglichen Zusatzinformationen können auf vorteilhafte Art und Weise in länderspezifischen orts- und zeitabhängigen Faktoren unterteilt und in Kartenschichten zusammengefasst werden.

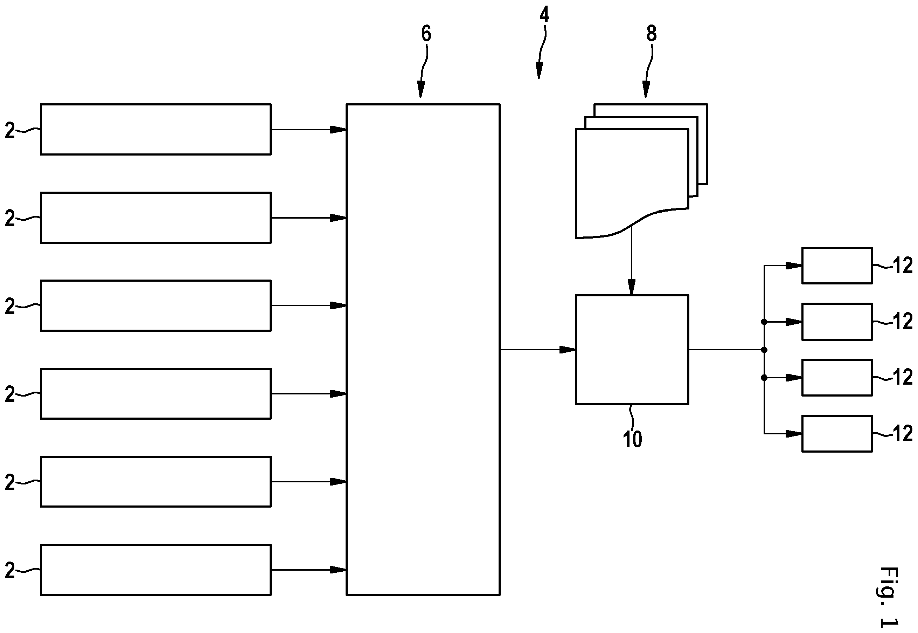

Die Anreicherung der zusätzlichen Kartenschicht kann beispielsweise auf Basis von Unfallstatistiken und durch die Abbildung von "ungeschriebenen Gesetzen" erfolgen. Außerdem können gefährliche Situationen aus Messdaten klassifiziert und dazu genutzt werden, die Kartenschicht zu füllen.

In einer Weiterbildung wird die Zusatzinformation in einer separaten Kartenschicht zusätzlich zu der Straßenkarte gespeichert. Dadurch ist ein schneller Zugriff möglich. Zudem können die Zusatzdaten einfach geändert werden, ohne die Kartendaten ändern zu müssen.

In einer Weiterbildung werden länderspezifische orts- und zeitabhängige Faktoren gruppiert und in Kartenschichten zusammengefasst. Dadurch kann schnell auf die gewünschte Zusatzinformation zugegriffen werden

In einer Weiterbildung werden die Zusatzinformationen aus Informationsquellen, wie z.B. Unfallstatistiken, Erfassung "ungeschriebener Gesetze" eines Landes/Region sowie dem Lernen aus Messdaten ermittelt. Auf diese Weise ist eine einfache und zuverlässige Ermittlung von Zusatzinformationen möglich.

Ein Ausführungsbeispiel der Erfindung ist in der nachfolgenden Beschreibung näher erläutert.

In der Figur ist schematisch der Aufbau und die Parametrisierung eines Fahrerassistenzsystems in Abhängigkeit von Umfeldinformationen dargestellt.

Die Figur zeigt eine beliebige Anzahl von Sensoren 2, die in einem Fahrzeug vorzufinden sind. Zu derartigen Umfeldsensoren gehören beispielsweise ein Navigationssystem mit einer hinterlegten Straßenkarte, Radar- oder Lasersensoren zur Erfassung des Abstandes zu anderen Fahrzeugen, sowie eine Fahrzeug-Fahrzeug- Kommunikationseinrichtung. Desweiteren sind Sensoren 2 zur Erfassung von Zustandsgrößen des Fahrzeuges vorgesehen, wie beispielsweise die Geschwindigkeit, Drehraten der Fahrzeugräder oder die Fahrzeugquerbeschleunigung.

Die Informationen der einzelnen Sensoren werden als Eingangssignale einem Regel- bzw. Steuergerät 4 zugeführt, welches wiederum einen Bewertungsblock 6, einen Speicherblock 8 sowie einen Auswahlblock 10 aufweist. Die von den Sensoren 2 erfassten aktuellen Daten werden zunächst im Bewertungsblock 6 einer Analyse unterzogen, wie kritisch die aktuelle Fahr- bzw. Verkehrssituation zu bewerten ist. Anhand von bestimmten diskreten Annahmen kann dabei eine Einstufung in unkritische, normale und kritische Fahrsituationen vorgenommen werden. Eine kritische Fahrsituation wird einem hohen Gefährdungspotenzial beigemessen, während einer unkritischen Fahrsituation ein niedriges Gefährdungspotenzial zugeordnet ist. Im Speicherblock 8 sind verschiedene Parametersätze hinterlegt, die den jeweiligen Gefährdungssituationen entsprechen.

Im Auswahlblock 10 des Steuergeräts 4 wird in Abhängigkeit der aktuellen Bewertung der Fahrsituation aus dem Bewertungsblock 6 der entsprechende Parametersatz aus dem Speicherblock 8 ausgewählt und aktiviert. Der ausgewählte Parametersatz wird anschließend einem oder mehreren Fahrerassistenzsystemen 12 zur Verfügung gestellt, so dass das betreffende Fahrerassistenzsystem entsprechend auf ein normales, ein hohes oder niedriges Gefährdungspotenzial eingestellt wird.

Im Weiteren wird dabei ein Navigationssystem mit hinterlegter Straßenkarte betrachtet. Derartige Navigationssysteme geben dabei auf ihrem Display auch aktuelle orts- und/oder zeitspezifische Informationen, beispielsweise über Geschwindigkeitsbegrenzungen, aus. Diese Informationen sind entweder in der Straßenkarte bzw. im Navigationssystem bereits hinterlegt, oder werden beispielsweise über den Verkehrsfunk eingespielt.

Auch die Einhaltung bzw. Nichteinhaltung von Verkehrsregeln können unterschiedliche Gefährdungspotenziale hervorrufen. Derartige Verkehrsregeln sind länderspezifisch und deren Einhaltung hängt von den Faktoren Zeit und Ort ab. Zu den ortsabhängigen (Risiko-)Faktoren zählen beispielsweise die Umgebung von Schulen und Kindergärten, bei denen entlang der Zufahrtsrouten die Wahrscheinlichkeit erhöht ist, dass Verkehrsregeln, z.B. von Kindern auf dem Weg zur Schule, nicht beachtet werden. Während in vielen Kulturkreisen die Einhaltung vieler Verkehrsregeln zu erwarten ist und Ausnahmen, wie beispielsweise Geisterfahrer auf einer Autobahn, nur selten auftreten, ist in bestimmten Ländern die Gefahr der Missachtung bestimmter Verkehrsregeln, z.B. das Befahren von Einbahnstraßen in Gegenrichtung sehr hoch.

Andere Regeln, wie z.B. die Einhaltung eines Mindestabstandes zum Vordermann werden zum Beispiel in Deutschland häufig nicht beachtet und können daher in der automatisierten Fahrfunktion des Fahrerassistenzsystems entsprechend hinterlegt werden.

In der direkten Umgebung von Schulen und Kindergärten und entlang der Zufahrtsrouten ist die Wahrscheinlichkeit erhöht, z.B. kurz vor Schulbeginn oder kurz nach Schulschluss, dass Verkehrsregeln missachtet werden, wie beispielsweise die ordnungsgemäße Nutzung des Fußgängerübergangs ("Zebrastreifen").

Die zuvor geschilderten orts- und/oder zeitabhängigen Faktoren können entsprechend gruppiert und in Kartenschichten zusammengefasst werden. Aktive Schichten werden bei der Interpretation der Umgebung verwendet und entweder dem Fahrer auf seinem Display des Navigationssystems angezeigt oder das Verhalten des Fahrzeugs entsprechend angepasst. Die Anreicherung der einzelnen Schichten kann auf den unterschiedlichsten Informationsquellen basieren. So geben z. B. Unfallstatistiken Hinweise, wo und wie häufig Verkehrsregeln missachtet worden sind. Dadurch kann die Wahrscheinlichkeit für die Entstehung von Unfällen besser abgeschätzt werden. Es können zudem "Ungeschriebene Gesetze" eines Landes/Region abgebildet und gefährliche Situationen aus Messdaten klassifiziert und berücksichtigt werden.

Die Zusatzinformationen können von dem Fahrerassistenzsystem bei der Unterstützung des Fahrers beim Fahren des Fahrzeugs, bei einem autonomen Fahren des Fahrzeugs und bei Sicherheitsfunktionen wie z. B. einem automatischen Bremsen berücksichtigt werden. Das Fahrerassistenzsystem kann beispielsweise Hinweise abhängig von der Fahrsituation und der Zusatzinformation ausgeben. Zudem kann das Fahrerassistenzsystem aktiv in die Steuerung und Regelung des Fahrzeuges abhängig von der Fahrsituation des Fahrzeuges und abhängig von der Zusatzinformation eingreifen.

Eine Möglichkeit die Zusatzinformation zu nutzen besteht z.B. darin, je nach Ort und/oder Zeit andere Bewegungsmodelle zu verwenden.

Bewegungsmodelle werden genutzt, um eine Vorhersage zu machen, wohin sich ein anderer Verkehrsteilnehmer bewegt. Die Vorhersage ist eine Grundlage, um das eigene Verhalten zu planen. Bewegungsmodelle können für Fahrzeuge, aber auch für Fußgänger eingesetzt werden.

"Normale" Fußgänger bewegen sich typischerweise entlang von Fußwegen. Schüler nach Schulschluss oder kurz vor Schulbeginn überqueren eher spontan (unvorsichtig) die Straße. Ihre Bewegung widerspricht dann dem einfachen Bewegungsmodell für einen normalen Fußgänger. Somit wird zwischen 7:45-8:15 Uhr oder 13:00-14:00 Uhr im Bereich von Schulen ein Bewegungsmodell für einen Schüler verwendet. Das Fahrerassistenzsystem erhält somit durch das veränderte Bewegungsmodell den Hinweis zwischen 7:45-8:15 Uhr oder 13:00-14:00 Uhr im Bereich von Schulen passiver und langsamer an einer Schule vorbei zu fahren als außerhalb der angegebenen Zeiten.

In analoger Weise können für verschiedene Länder unterschiedliche Bewegungsmodelle für Fußgänger und/oder Fahrzeuge verwendet werden. In manchen Ländern gehen die Fußgänger mit größerer Wahrscheinlichkeit über eine rote Fußgängerampel als in anderen Ländern. Zudem überholen in manchen Ländern die Fahrzeuge oder Motorräder aggressiver als in anderen Ländern. Entsprechend werden die entsprechenden Zusatzinformationen zu den Ländern bzw. zu den Orten und/oder Uhrzeiten abgelegt.

## Patentansprüche

1. Fahrerassistenzsystem für ein Fahrzeug, wobei eine Straßenkarte vorgesehen ist, wobei wenigstens eine Zusatzinformation über eine orts- und/oder zeitspezifische Einhaltung von Verkehrsregeln vorgesehen ist, und wobei das Fahrerassistenzsystem auf die Straßenkarte und die Zusatzinformation zugreift, um einen Fahrer beim Führen des Fahrzeugs zu unterstützen, **dadurch gekennzeichnet, daß**
die Zusatzinformation in Form eines Bewegungsmodells berücksichtigt wird, das eine Vorhersage macht, wohin sich ein anderer Verkehrsteilnehmer bewegt und das Bewegungsmodell abhängig von einem Ort und/oder einer Uhrzeit ist.

2. Fahrerassistenzsystem nach Anspruch 1, **dadurch gekennzeichnet, dass** die Zusatzinformationen in einer separaten Kartenschicht zusätzlich zu der Straßenkarte gespeichert sind.

3. Fahrerassistenzsystem nach Anspruch 1 oder 2, **dadurch gekennzeichnet, dass** länderspezifische orts- und zeitabhängige Faktoren gruppiert und in Kartenschichten zusammengefasst sind.

4. Fahrerassistenzsystem nach einem der vorhergehenden Ansprüche, wobei das Fahrerassistenzsystem ausgebildet ist, um zur Unterstützung des Fahrers einen Hinweis auszugeben oder um eine Steuerung des Fahrzeuges zu beeinflussen.

5. Verfahren zum Unterstützen eines Fahrers beim Führen eines Fahrzeuges, wobei abhängig von einer Fahrsituation und abhängig von Informationen einer Straßenkarte und abhängig von wenigstens einer Zusatzinformation über eine orts- und/oder eine zeitspezifische Einhaltung von Verkehrsregeln ein Hinweis an den Fahrer ausgegeben wird und/oder eine Steuerung des Fahrzeuges beeinflusst wird, **dadurch gekennzeichnet, dass** die Zusatzinformation in Form eines Bewegungsmodells berücksichtigt wird, das eine Vorhersage macht, wohin sich ein anderer Verkehrsteilnehmer bewegt, wobei das Bewegungsmodell abhängig von einem Ort und/oder einer Uhrzeit ist.

6. System zur Bereitstellung zusätzlicher Informationen für eine Straßenkarte für ein Fahrerassistenzsystem, wobei zur Straßenkarte Zusatzinformationen über eine orts- und/oder zeitspezifische Einhaltung von Verkehrsregeln durch einen Fahrer eines Fahrzeugs bereitgehalten werden, **dadurch gekennzeichnet, dass** die Zusatzinformation in Form eines Bewegungsmodells bereitgehalten wird, das eine Vorhersage macht, wohin sich ein anderer Verkehrsteilnehmer bewegt, wobei das Bewegungsmodell abhängig von einem Ort und/oder einer Uhrzeit ist.

7. Datenspeicher mit Programmcodemitteln, die geeignet sind, um beim Ablaufen auf einer Recheneinheit ein Verfahren nach Anspruch 5 auszuführen.

## Claims

1. Driver assistance system for a vehicle, wherein a road map is provided, wherein at least one item of additional information about location- and/or time-specific compliance with traffic regulations is provided, and wherein the driver assistance system accesses the road map and the additional information in order to support a driver when driving the vehicle, **characterized in that** the additional information is taken into account in the form of a movement model which makes a prediction of where another road user is moving to, and the movement model is dependent on a location and/or a time of day.

2. Driver assistance system according to Claim 1, **characterized in that** the items of additional information are stored in a separate map layer in addition to the road map.

3. Driver assistance system according to Claim 1 or 2, **characterized in that** country-specific location- and time-dependent factors are grouped and combined in map layers.

4. Driver assistance system according to any of the preceding claims, wherein the driver assistance system is configured to output an indication for supporting the driver or to influence a control of the vehicle.

5. Method for supporting a driver when driving a vehicle, wherein depending on a driving situation and depending on items of information of a road map and depending on at least one item of additional information about location- and/or time-specific compliance with traffic regulations, an indication is output to the driver and/or a control of the vehicle is influenced, **characterized in that** the additional information is taken into account in the form of a movement model which makes a prediction of where another road user is moving to, wherein the movement model is dependent on a location and/or a time of day.

6. System for providing additional items of information for a road map for a driver assistance system, wherein with respect to the road map items of additional information about location- and/or time-specific compliance with traffic regulations by a driver of a vehicle are kept available, **characterized in that** the additional information is kept available in the form of a movement model which makes a prediction of where another road user is moving to, wherein the movement model is dependent on a location and/or a time of day.

7. Data memory comprising program code means that are suitable for performing a method according to Claim 5 when executed on a computing unit.

## Revendications

1. Système d'aide à la conduite pour un véhicule, une carte routière étant prévue, au moins une information additionnelle concernant un respect de règles de circulation spécifiques au lieu ou à l'heure étant prévue et le système d'aide à la conduite accédant à la carte routière et à l'information additionnelle pour assister un conducteur pour la conduite du véhicule, **caractérisé en ce que** l'information additionnelle est prise en considération sous la forme d'un modèle de déplacement qui prédit l'endroit vers lequel se déplace un autre participant au trafic et le modèle de déplacement dépend d'un lieu et/ou d'une heure.

2. Système d'aide à la conduite selon la revendication 1, **caractérisé en ce que** les informations additionnelles sont mémorisées dans une couche séparée de la carte, en supplément de la carte routière.

3. Système d'aide à la conduite selon la revendication 1 ou la revendication 2, **caractérisé en ce que** les facteurs spécifiques au pays, dépendant du lieu et de l'heure sont regroupés et rassemblés dans des couches de la carte.

4. Système d'aide à la conduite selon l'une quelconque des revendications précédentes, le système d'aide à la conduite étant conçu pour éditer une information pour assister le conducteur ou pour influencer une commande du véhicule.

5. Procédé destiné à assister un conducteur lors de la conduite d'un véhicule, en fonction d'une situation de conduite ou en fonction d'informations d'une carte routière et en fonction d'au moins une information additionnelle concernant un respect spécifique au lieu et/ou à l'heure de règles de circulation, une information étant éditée à l'attention du conducteur et/ou une commande du véhicule étant influencée, **caractérisé en ce que** l'information additionnelle est prise en considération sous la forme d'un modèle de déplacement qui prédit vers quel endroit se déplace un autre participant au trafic, le modèle de déplacement dépendant d'un lieu et/ou d'une heure.

6. Système destiné à mettre à disposition des informations additionnelles pour une carte routière pour un système d'aide à la conduite, en complément de la carte routière, des informations additionnelles concernant un respect spécifique au lieu et/ou à l'heure de règles de conduite étant préparées par un conducteur d'un véhicule, **caractérisé en ce que** l'information additionnelle est préparée sous la forme d'un modèle de déplacement qui prédit vers quel endroit se déplace un autre participant au trafic, le modèle de déplacement dépendant d'un lieu et/ou d'une heure.

7. Mémoire de données avec des moyens de codage de programme qui sont adaptés pour réaliser un procédé selon la revendication 5 lors de leur exécution sur une unité informatique.
